# EUROPÄISCHE PATENTSCHRIFT

(11) **EP 1 337 092 B1**
(45) Veröffentlichungstag und Bekanntmachung des Hinweises auf die Patenterteilung: **11.04.2007**
(21) Anmeldenummer: 02003638.0
(22) Anmeldetag: 18.02.2002
(51) Int. Cl.: H04M 1/24, H04M 11/06, H04M 3/30, H04L 12/26, H04Q 11/04

(54) **Überprüfungsverfahren und Splitter zu Netzabschlussgeräten**
Monitoring method and splitter for network terminal equipment
Procédé de surveillance et diviseur pour un dispositif de terminaison de réseau

(43) Veröffentlichungstag der Anmeldung: 20.08.2003
(73) Patentinhaber: Siemens Schweiz AG, 8047 Zürich (CH)
(72) Erfinder: Kopp, Peter, 8967 Widen AG (CH)
(74) Vertreter: Kley, Hansjörg

(56) Entgegenhaltungen:
- WO-A-01/95598
- WO-A-99/14921
- DE-A- 10 023 891
- US-A- 5 841 836
- US-A1- 2001 021 193

## Beschreibung

Die vorliegende Erfindung betrifft ein Überprüfungsverfahren nach dem Oberbegriff des Patentanspruchs 1 und einen Splitter zu Netzabschlussgeräten gemäss dem Oberbegriff des Patentanspruches 8.

Die vorliegende Erfindung betrifft das Gebiet des Zugangsnetzes (Access Network) bei dem z.B. über eine Zweidraht-Cu-Leitung ein sogenannter Breitbandzugang für Internetdienste und über dieselbe Leitung ein Zugang für ISDN-Dienste oder POTS-Dienste ermöglicht wird. Ein solches System ist in WO 99/51019 A1 (RAYCHEM Corp) für einen über eine Zweidraht-Cu-Leitung kombinierten ADSL-ISDN-Zugang offenbart.

Netzabschlusskonfigurationen der vorstehend erwähnten Art umfassen einen Splitter, der die den ISDN- und ADSL-Diensten zugeordneten Signale trennt und dadurch die entsprechenden Anschlusstechnologien so verfügbar macht, als ob diese direkt einer Vermittlungs- oder Verteilstelle entstammen. Die vorgenannten Signale sind dabei entsprechenden Frequenzbändern zugeordnet. An einen Splitter auf der Teilnehmerseite sind dementsprechend eine Schnittstelle U für den Anschluss eines ISDN-Netzabschlussgerätes (NT1) und eine «ADSL»-Schnittstelle für den Anschluss eines entsprechenden handelsüblichen ADSL-Modems vorgesehen. An einem solchen Modem ist ein Personalcomputer z.B. über eine USB-Strecke oder eine 10BaseT-Strecke angeschlossen.

Speziell bei der erstmaligen Inbetriebnahme einer solchen Netzabschlusskonfiguration mit zwei verschiedenen Übertragungsverfahren stellt sich das Problem, mögliche Fehler exakt feststellen zu können. Solche Fehler können die Strecke als solches, die Verdrahtung/Kontaktierung vor Ort wie auch die aktuelle Konfiguration oder der aktuelle Zustand auf Seite des Zugangsnetzes wie auch der einen oder anderen Schnittstelle auf Seite des Teilnehmers betreffen. Bei der Inbetriebnahme sollte möglichst ohne speziell geschultes Personal und ohne eine zusätzliche Mess- und Prüfausrüstung eine solche Zustandsermittlung und Fehlerlokalisation durchgeführt werden können.

Dieses Problem stellte sich auch schon bei einem gewöhnlichen Netzabschlussgerät für einen ISDN-Teilnehmeranschluss. Zur Lösung dieses Problems wird in DE 100 23 891 A1 (Deutsche Telekom AG) ein Prüfsystem zum Prüfen eines digitalen Teilnehmeranschlusses eines Kommunikationsnetzes vorgeschlagen. Dieses Gerät ist insbesondere in der Lage, die Art des digitalen Teilnehmeranschlusses wie beispielsweise die Punkt-Punkt- oder die Mehrpunktkonfiguration eines ISDN-Anschlusses automatisch zu erkennen. Zwar erfordert das vorgeschlagene Prüfsystem keine besonderen technische Vorkenntnisse, jedoch ist zum Prüfen ein zusätzliches Gerät einzusetzen.

Aus der Schrift WO 99/14921 A1 (Netspeed, inc) ist ein Verfahren bekannt, das erlaubt, die Eignung einer bestimmten 2-Drahtstrecke zu einem Teilnehmer zu testen. Der Test beruht auf auf dieser Leitung übertragenen «Test-Signaturen» wie z.B. Pulse, modulierte Töne QAM-Signale oder andere xDSL Signale auf Schicht 1 (physical layer). Dieses Verfahren erlaubt nicht nur das Feststellung der Eignung einer bestimmten 2-Drahtstrecke für eine xDSL-Übertragung, sondern auch die Überwachung einer installierten Strecke. Dadurch können bereits vor einer spürbaren Degradation Massnahmen (z.B. eine Alarmmeldung) eingeleitet werden. Dieses Verfahren eignet sich jedoch nicht für die Feststellung von Konfigurationsfehlern an der Netzabschlusskonfiguration selber.

Der vorliegenden Erfindung liegt daher die Aufgabe zugrunde, ein Überprüfungsverfahren und einen Splitter zur Durchführung des genannten Verfahrens für eine Netzabschlusskonfiguration mit zwei verschiedenen Anschlusstechnologien der eingangs genannten Art anzugeben, die die benötigte Information zur Überprüfung der Konfiguration anzeigt und keine zusätzlichen Prüf- oder Testgeräte benötigt.

Diese Aufgabe wird erfindungsgemäss durch das im Patentanspruch 1 angegebene Überprüfungsverfahren und durch den in Patentanspruch 8 angegebenen Splitter gelöst. Vorteilhafte Ausgestaltungen der Erfindung sind in weiteren Ansprüchen angegeben.

Gemäss dem erfindungsgemässen Verfahrens, wonach mittels über das Zugangsnetz bidirektional übermittelten Hochlauf-Meldungen Zustand und/oder Konfiguration eines der Anschlüsse festgestellt und an einem auf dem Splitter befindlichen Anzeigeelement visualisiert werden;
sind Zustand und Konfiguration eines Anschlusses ohne Zuhilfenahme von einer zusätzlichen Prüfeinrichtung feststellbar.
i) Dadurch, dass
   bei Abwesenheit von wenigstens einem Netzabschlussgerät der Splitter Zustand und/oder Konfiguration des betreffenden Anschlusses feststellt; kann die Funktionstüchtigkeit eines Anschlusses bereits bei der Inbetriebnahme festgestellt und gegebenenfalls korrigiert werden, ohne dass bereits ein Netzabschlussgerät oder ein Modem angeschlossen sein muss (Patentanspruch 2).
ii) Dadurch, dass
   für einen Anschluss, an dem ein Netzabschlussgerät angeschlossen ist, jene Meldungen, die zwischen Netzabschlussgerät und Zugangsnetz übermittelt werden und den Zustand und/oder die Konfiguration des betreffenden Anschlusses beinhalten, vom Splitter festgestellt und am betreffenden Anzeigeelement visualisiert werden; können Abweichung des Betriebsverhaltens bereits in einer Phase angezeigt werden, bevor sich die genannte Abweichung bei einem an einem Modem oder an einem Netzabschlussgerät angeschlossenen Endgerät auswirkt (Patentanspruch 3).
iii) Dadurch, dass
   der Splitter ein Betätigungselement aufweist, so dass bei Betätigung des Betätigungselementes der Splitter Meldungen Richtung Zugangsnetz übermittelt, um erneut Zustand und/oder Konfiguration eines Anschlusses festzustellen;
   eignet sich das Verfahren auch für die Anwendung durch geschultes Personal, ohne dass eine zusätzliche Prüfeinrichtung bereitgestellt werden muss (Patentanspruch 5).
v) Dadurch, dass
   für den Splitter über die Splitterschaltung vom Zugangsnetz zugeführte Energie entnehmbar und über eine Verbindung dem Prozessor zuführbar ist;
   kann für die Ausführung des Splitters auf ein separates Netzteil verzichtet werden ohne dass deswegen eine Einschränkung in der Funktionalität der Überprüfung betreffend Zustand und Konfiguration eintritt (Patentanspruch 11).
vi) Dadurch, dass
   den Anschlüssen je ein Anzeigeelement und je ein Betätigungselement zugeordnet ist, die über das Businterface mit dem Prozessor verbunden sind;
   können auf differenzierte Weise Zustand und Konfiguration des betreffenden Anschlusses erneut festgestellt und visualisiert werden (Patentanspruch 12).

Ein Ausführungsbeispiel der Erfindung wird nachfolgend anhand der Zeichnungen näher erläutert. Dabei zeigen:
- Figur 1: Teilübersicht einer Übertragungsstrecke und den zugehörigen Einrichtungen auf Seite der Vermittlungsstellen (Switch) und auf Seite des Teilnehmers (Subscriber);
- Figur 2: Blockschaltbild eines erfindungsgemässen Splitters.

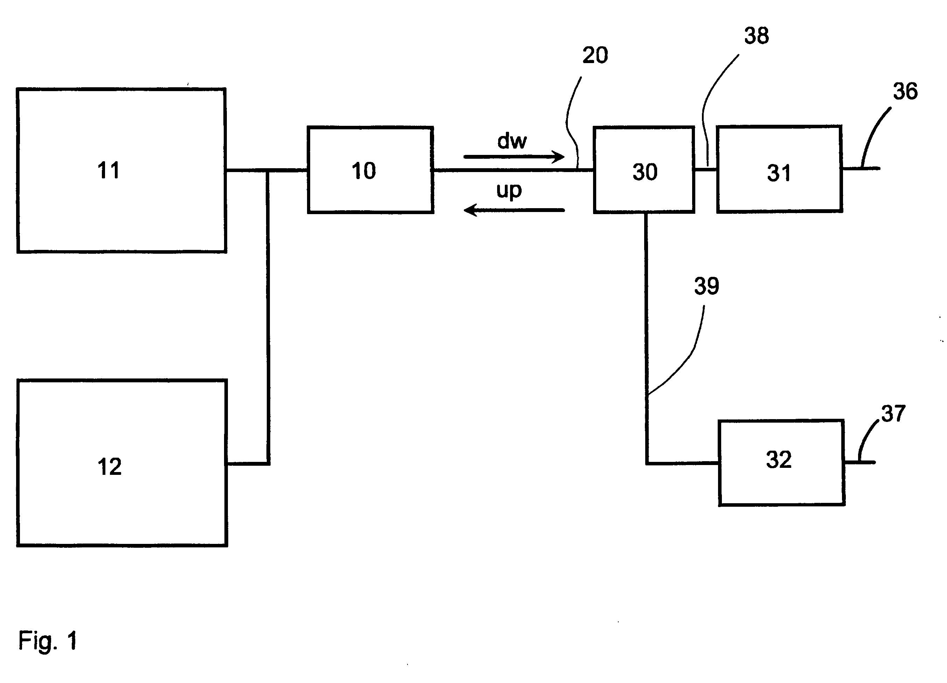

Figur 1 zeigt in einer Teilübersicht eine Übertragungsstrecke 20 und den zugehörigen Einrichtungen 10, 11 und 12 auf Seite der Vermittlungsstellen (Switch). Auf Seite des Teilnehmers (Subscriber) ist eine Netzabschlusskonfiguration dargestellt mit einem Splitter 30, an den ein ISDN-Netzabschlussgerät (Network Termination NT1) 31 und ein ADSL-Modem 32 anschliessbar sind. Die in der Beschreibung dieses Ausführungsbeispiels verwendete Terminologie U-Strecke bzw. ADSL-Strecke wird unter dem Begriff Anschlusstechnologie subsummiert. Die in Fig. 1 dargestellte Übersicht orientiert sich an dem in der Recommendation G.994.1 (02/2001) [1] angegebenen Systemreferenzmodell. Die für die U-Strecke heranzuziehende Spezifikation ist dem Dokument "ETSI TS 102 080 V1.3.1 (1998-11) Transmission and Multiplexing (TM)" [2] zu entnehmen.

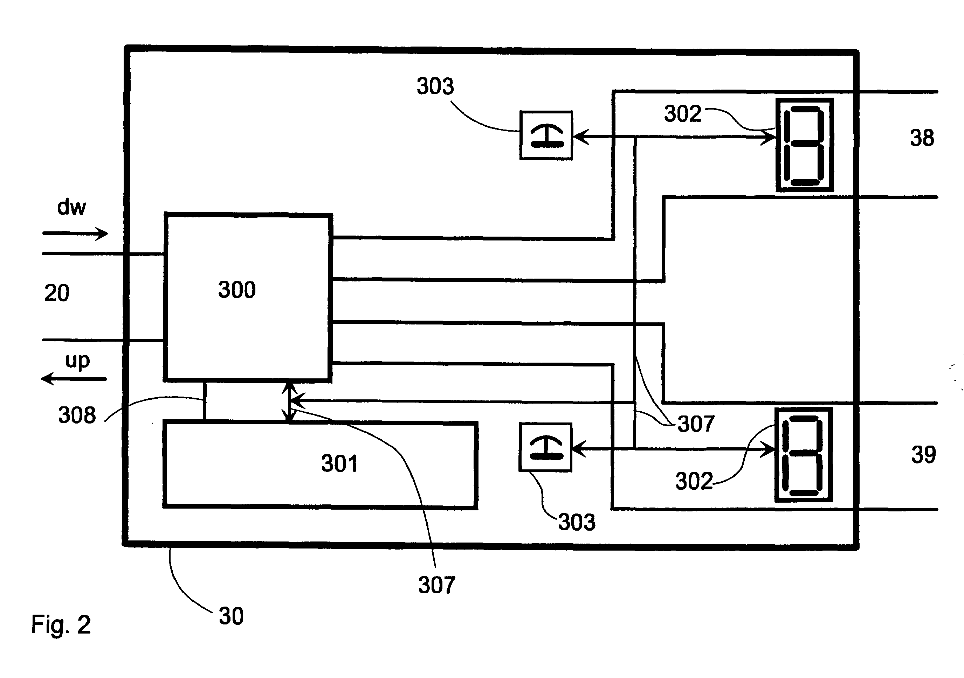

Figur 2 zeigt ein Blockschaltbild eines erfindungsgemässen Splitters 30 mit einem Prozessor 301, an den direkt oder über Treiberbausteine Anzeigeelemente 302 angeschlossen sind. Solche Anzeigeelemente 302 können als LCD-Siebensegmentanzeigen oder als LED's (Light emitting diode) ausgebildet sein. Bei der Verwendung von LED's können verschiedene Farben wie auch ein Blinken vorgesehen sein, um bestimmte Zustände oder Konfigurationen eines Anschlusses 38, 39 oder des Zugangsnetzes 20 zu visualisieren. Um differenziertere Zustände (Konfigurationen anzeigen zu können, sind in dieser Ausführungsform der vorliegenden Erfindung je eine LCD-Siebensegmentanzeige vorgesehen, die der U-Strecke und der ADSL-Strecke zugeordnet sind. Es ist in einer anderen Ausführungsform auch möglich, nur ein einziges Anzeigeelement 302 vorzusehen, an den die Zustände und/oder Konfigurationen von zwei oder mehreren Anschlüssen 38, 39 visualisiert werden.

Der Prozessor 301 ist vorzugsweise ein Single-Chip Prozessor, der enthält:
RAM- und PROM-Speicher,
einen integrierten Timer- und Interruptcontroller, Peripherieschnittstellen,
ein Bus-Interface zum Anschluss weiterer allfälliger Bauelemente wie z.B. Zusatzspeicher.

Der Prozessor 301 ist in dieser Ausführungsform über das vorgenannte Bus-Interface 307 mit der eigentlichen Splitter-Schaltung 300 verbunden. Mit einer Interfaceschaltung (nicht dargestellt in Fig. 2) in der Splitter-Schaltung 300 können Signale von der Zweidraht-Cu-Leitung 20 abgegriffen und Signale in die Leitung 20 eingespeist werden. Der Splitter 30 weist in aller Regel keine zusätzliche externe Energieversorgung mit z.B. 230 V AC auf. Deshalb ist in der vorgenannten Interfaceschaltung auch ein Abgreifen einer vorhandenen DC- oder niederfrequenten AC-Spannung erforderlich, um den Prozessor 301 sowie die Anzeigeelemente 302 mit Energie versorgen zu können. Gemäss [2] 10.5. 1 stehen dazu verschiedene DC-Spannungen zur Verfügung. Da der erfindungsgemässe Splitter 30 ohne externe Energieversorgung vorgesehen ist, muss dieser Impedanzbedingungen aufweisen, die einem sogenannten Notbetrieb (restricted power mode) gemäss [2] 10.6.1 genügen. Vorteilhafterweise wird zu einer Pufferung und kurzfristigen Speicherung zusätzlich ein Kondensator vorgesehen. Die benötigte Energie für die Versorgung von Prozessor 301 und Anzeigeelemente 302 wird über die Verbindung 308 von der Splitter-Schaltung 300 zum Prozessor 301 übertragen. Der Prozessor 301 weist einen sogenannten "stand by"- Modus auf (auch Energiesparmodus oder "low power"-Modus genannt), bei dem die Funktion des Prozessors "eingefroren" ist, jedoch z.B. die integrierte Interfaceschaltung für LCD-Anzeigeelemente 302 insoweit aktiviert bleibt, als auf den LCD-Anzeigeelementen 302 eine bestimmte Information angezeigt werden kann.

In der Darstellung der Fig. 1 wird angenommen, dass am erfindungsgemässen Splitter 30 auf der Teilnehmerseite eine U-Strecke 38 und eine ADSL-Strecke 39 vorhanden sind. Bei der Inbetriebnahme eines solchen Splitters 30 wird in dieser Ausführungsform der vorliegenden Erfindung ausdrücklich nicht vorgesehen, dass tatsächlich ein ISDN-Netzabschlussgerät 31 und ein ADSL-Modem 32 am Splitter 30 angeschlossen sind.

Gemäss dem Dokument [2] erfolgt beim erstmaligen Anschliessen oder einem Wiederanschliessen nach einem galvanischen Unterbruch ein Hochlauf (startup). Dieses Verfahren ist im Dokument [2] im Abschnitt A.10.1 im einzelnen spezifiziert. Dabei werden, wie unter "A.10.1.2 Line rate during start up" angegeben, im Bereich 10 KHz Pulssequenzen ausgetauscht. Diese Pulssequenzen beinhalten gemäss dem vereinbarten Leitungscode 2B1Q Meldungen, wie dies dem Annex A von [2] zu entnehmen ist. Für die Implementierung können die genau gleiche Abfolge von Meldungen in den Richtungen dw und up wie in einem herkömmlichen Netzabschlussgerät (NT1) 31 benutzt werden. Zu beachten ist, dass an einer U-Strecke 38 nur ein einziges Netzabschlussgerät 38 angeschlossen werden darf. Es ist daher vorzusehen, dass eine mit dem Prozessor 301 über die Interfaceschaltung nachgebildete Mimik erkennt, wenn tatsächlich ein Netzabschlussgerät 38 am Ausgang des Splitters 30 angeschlossen wird und dass ab Erkennung dieses Anschlusses instantan keine weiteren Meldungen Richtung Vermittlungsstelle gesendet werden. Um einen erneuten Hochlauf zu ermöglichen, kann vorgesehen sein, dass auf der Strecke Netzabschlussgerät 31 zu Splitter 30 ein Unterbruch simuliert wird, so dass mit dem realen Netzabschlussgerät 31 erneut ein Hochlauf gemäss der Spezifikation A.10.1 im Dokument [2] vorgenommen werden kann. Aufgrund der von der Netzseite empfangenen Meldungen können die die Schicht 1 betreffenden Zustände auf der der U-Strecke zugeordneten LCD-Siebensegmentanzeige abgebildet werden.

Die Feststellung einer bestimmten auf der Vermittlungsseite eingerichteten ADSL-Konfiguration erfolgt ebenfalls mit einer Abfolge von Meldungen. Gemäss den Angaben in [1] 7.2 wird vom erfindungsgemässen Splitter 30 eine Meldung CLR in der Richtung up gesandt. Dabei ist zu beachten, dass die Meldung CLR möglichst viele Betriebsmodi enthalten soll, da lediglich eine korrekte Verbindung, nicht aber ein Nutzbetrieb etabliert werden soll. Von einer in [2] genannten zentralen xDSL Terminal Einheit HSTU-C, die in dieser Schrift als ADSL-Modem 12 bezeichnet wird, erfolgt eine Quittierung der Meldung CLR gemäss [2] 7.1 mit einer Meldung CL in der Richtung dw. Diese Meldung CL enthält die tatsächlich verfügbaren Betriebsmodi. Diese Meldung CL wird durch die Splitter-Schaltung 300 demoduliert. Mittels des Prozessors 301 wird der Inhalt dieser Meldung CL an der der ADSL-Strecke zugeordneten Siebensegmentanzeige 302 visualisiert. Erfolgt nachher z.B. durch eine Manipulation eine galvanische Trennung der Übertragungsstrecke 20, bleibt die Information an der Siebensegementanzeige 302 dank der Energiepufferung und dem Power-Down-Modus des Prozessors 301 für eine bestimmte Zeit noch erhalten.

Für den Anschluss eines ADSL-Modems 32 ist in der Splitter-Schaltung 300 vorgesehen, dass vom ADSL-Modem 32 kommende Meldungen, wie z.B. die vorstehende erwähnte Meldung CLR, mittels der Interfaceschaltung vom Prozessor erkannt und transparent an das ADSL-Modem 12 auf Seite der Vermittlungsstelle durchgereicht werden. Ein solcher Betriebsmodus des erfindungsgemässen Splitters 30 kann die gleichen Zustandsmeldungen wie ohne angeschlossenes ADSL-Modem 32 auf der Siebensegmentanzeige 302 anzeigen, zur Unterscheidung kann zusätzlich ein Punkt angezeigt werden (nicht dargestellt in Fig. 2).

In einer vorteilhaften Weiterbildung der Erfindung kann zu einer am Splitter 30 verfügbaren Netzanschlusstechnologie ein Betätigungselement 303 vorgesehen werden, mit dem abhängig von der angezeigten Information am zugeordneten Anzeigeelement 302 vom Splitter 30 aus z.B. eine erneute Initialisierung mit der vorgenannten Abfolge von Meldungen Richtung Vermittlungsstelle eingeleitet werden kann. Ebenso ist es auch möglich, im ordentlichen Betriebszustand der tatsächlich angeschlossenen Netzabschlussgeräte 31 bzw. Modems 32 diese Kurzfristig abzutrennen und durch den Splitter 30 einen erneuten Hochlauf vornehmen zu lassen. Die Betätigungselemente können auch dazu benutzt werden, verschiedene Informationen nacheinander anzuzeigen, um für eine geschulte Person eine differenzierte Analyse des Zustandes des Zugangsnetzes 20 oder der Anschlüsse 38, 39 anzeigen zu können.

Im Sinne dieser Schrift wird unter dem Begriff "Netzabschlussgerät" auch ein Modem verstanden, das die im vorliegenden Ausführungsbeispiel subsummierte Funktionalität eines ADSL-Modems aufweist.

Das vorgenannte Anzeigeelement 302 braucht nicht am Splitter 30 selbst angeordnet zu sein. Möglich ist auch, die vom Splitter 30 generierten und empfangenen Meldung über die Teilnehmeranschlussbaugruppe 11 und das ADSL-Modem 12 über eine Netzverbindung an einer zentralen Stelle anzuzeigen.

Die vorgenannte Überprüfung eines Anschlusses 38, 39, an den kein Netzabschlussgerät 31 oder 32 angeschlossen ist, kann auch dann angewendet werden, wenn z.B. ein ISDN-Netzabschlussgerät 31 am Anschluss 38 (bzw. über die U-Strecke 38) in Betrieb ist, jedoch der Zustand und die Konfiguration des nicht belegten ADSL-Anschlusses 39 festgestellt werden soll.

Die vorliegende Erfindung ist nicht auf die Ausführungsform mit einer über eine Zweidraht-Cu-Leitung geführten U- und ADSL-Strecke beschränkt, sondern kann für alle Netzabschlusskonfigurationen benutzt werden, bei denen gemischte Übertragungsverfahren zum Zuge kommen. Dabei können insbesondere auch mehr als zwei solche Übertragungsverfahren vorgesehen sein oder es kann für einen Dienst eine Duplizierung vorgesehen sein. Insbesondere ist es auch möglich, z.B. in einem geeignet gewählten xDSL-Übertragungsverfahren POTS- oder ISDN-Dienste zu übertragen.

### Liste der verwendeten Bezugszeichen

- 10: Splitter auf Seite der Vermittlungsstelle
- 11: Teilnehmeranschlussbaugruppe (TRUNC, LT)
- 12: ADSL-Modem auf Seite der Vermittlungsstelle
- 20: Zugangsnetz, Übertragungsstrecke, 2-Draht-Cu-Leitung
- 30: Splitter auf der Teilnehmerseite
- 31: Netzabschlussgerät, ISDN-Netzabschlussgerät
- 32: Modem, ADSL-Modem auf der Teilnehmerseite
- 36: S-Bus und/oder a/b-Strecke
- 37: USB- oder 10BaseT-Strecke
- 38: U-Strecke zum Netzabschlussgerät, Anschluss
- 39: ADSL-Strecke zum ADSL-Modem, Anschluss
- 300: Splitter-Schaltung mit aktiven/passiven Filtern
- 301: Prozessor
- 302: Anzeigeelemente
- 303: Drucktaste
- 307: Businterface, Bus
- 308: Verbindung für Energieübertragung
- dw: Übertragungsrichtung zum Teilnehmer, "downstream" gemäss [1]; Übertragungsrichtung von Meldungen nach [1] und/oder [2]
- up: Übertragungsrichtung zur Vermittlungsstelle, "upstream" gemäss [1]; Übertragungsrichtung von Meldungen nach [1] und/oder [2]
- CL: Capability List aus [1] 7.1
- CLR: Capability List Request
- HSTU-C Handshake: Transeiver Unit central site
- ISDN: Integrated Serices Digital Network
- POTS: Plain Old Telephone Service, z.B. analog a/b.

### Literaturliste

[1] ITU-T G. 994.1 (02/2001)
   SERIES G: TRANSMISSION SYSTEMS AND MEDIA, DIGITAL SYSTEMS AND NETWORKS
   Digital sections and digital line system - Access networks
   Handshake procedures for Digital Subscriber Line (DSL) transceivers
   (prepublished version)
[2] ETSI TS 102 080 V1.3.1 (1998-11)
   Transmission and Multiplexing (TM);
   Integrated Services Digital Network (ISDN) basic rate access;
   Digital transmission system on metallic local lines

## Patentansprüche

1. Überprüfungsverfahren für eine an einem Zugangsnetz (20) angeschlossene Netzabschlusskonfiguration, welche enthält: einen Splitter (30) an den über wenigstens je einen Anschluss (38, 39) ein entsprechendes Netzabschlussgerät (31, 32) anschliessbar ist, wobei die Anschlüsse (38, 39) unterschiedliche Anschlusstechnologien aufweisen,
**dadurch gekennzeichnet, dass**
mittels über das Zugangsnetz (20) bidirektional übermittelten Hochlauf-Meldungen Zustand und/oder Konfiguration eines der Anschlüsse (38, 39) festgestellt und an einem auf dem Splitter (30) befindlichen Anzeigeelement (302) visualisiert werden.

2. Überprüfungsverfahren nach Anspruch 1;
**dadurch gekennzeichnet, dass**
bei Abwesenheit von wenigstens einem Netzabschlussgerät (30, 31) der Splitter (30) Zustand und/oder Konfiguration des betreffenden Anschlusses (31, 32) feststellt.

3. Überprüfungsverfahren nach Anspruche 1 oder 2,
**dadurch gekennzeichnet, dass**
für einen Anschluss (38, 39), an dem ein Netzabschlussgerät (31, 32) angeschlossen ist, jene Meldungen, die zwischen Netzabschlussgerät (31, 32) und Zugangsnetz (20) übermittelt werden und den Zustand und/oder die Konfiguration des betreffenden Anschlusses (38, 39) beinhalten, vom Splitter (30) festgestellt und an einem dem betreffenden Anschluss (38, 39) zugeordneten Anzeigeelement (302) visualisiert werden.

4. Überprüfungsverfahren nach einem der Ansprüche 1 bis 3,
**dadurch gekennzeichnet, dass**
der Splitter (30) vom Zugangsnetz (20) gespeist wird.

5. Überprüfungsverfahren nach einem der Ansprüche 1 bis 4,
**dadurch gekennzeichnet, dass**
der Splitter (30) ein Betätigungselement (303) aufweist, so dass bei Betätigung des Betätigungselementes (303) der Splitter (30) Meldungen Richtung (up) Zugangsnetz (20) übermittelt, um erneut Zustand und/oder Konfiguration eines Anschlusses (38, 39) festzustellen.

6. Überprüfungsverfahren nach Anspruch 5,
**dadurch gekennzeichnet, dass**
pro Anschluss (38, 39) je ein Anzeigeelement (301) und je ein Betätigungselement (302) vorgesehen ist.

7. Überprüfungsverfahren nach einem der Ansprüche 3 bis 6,
**dadurch gekennzeichnet, dass**
der gleiche Zustand und/oder die gleiche Konfiguration an einem Anzeigeelement (302) unterschiedlich dargestellt ist, abhängig davon, ob am betreffenden Anschluss (38, 39) ein Netzabschlussgerät (31, 32) angeschlossen ist oder nicht.

8. Splitter (30) zum Anschluss an ein Zugangsnetz (20), der Anschlüsse (38, 39) unterschiedlicher Anschlusstechnologien aufweist und wobei an die Anschlüsse (38, 39) ein entsprechendes Netzabschlussgerät (31, 32) anschliessbar ist,
**dadurch gekennzeichnet, dass**
der Splitter (30) Mittel (300, 301, 308) aufweist, um Zustand und/oder Konfiguration eines Anschlusses (38, 39) mittels Hochlauf-Meldungen festzustellen und an einem auf dem Splitter (30) befindlichen Anzeigeelement (302) zu visualisieren.

9. Splitter (30) nach Anspruch 8,
**dadurch gekennzeichnet, dass**
er ein Anzeigeelement (302) aufweist, um einen festgestellten Zustände Zustand und/oder eine festgestellte Konfiguration zu visualisieren.

10. Splitter (30) nach Anspruch 9,
**dadurch gekennzeichnet, dass**
die genannten Mittel eine Splitterschaltung (300) und einen über ein Businterface (307) angeschlossenen Prozessor (301) umfassen, wobei über die Splitterschaltung (300) Meldungen (dw, up) abgegriffen und/oder eingefügt werden.

11. Splitter (30) nach Anspruch 10,
**dadurch gekennzeichnet, dass**
über die Splitterschaltung (300) vom Zugangsnetz (20) zugeführte Energie entnehmbar und über eine Verbindung (308) dem Prozessor (301) zuführbar ist.

12. Splitter (30) nach Anspruch 9 oder 10,
**dadurch gekennzeichnet, dass**
den Anschlüssen (38) je ein Anzeigeelement (302) und je ein Betätigungselement 303) zugeordnet ist, die über das Bus-interface (307) mit dem Prozessor (301) verbunden sind.

13. Splitter (30) nach Anspruch 11 oder 12,
**dadurch gekennzeichnet, dass**
der Splitter (30) einen Energiespeicher aufweist und dass der Prozessor (301) in einen Energiesparmodus schaltbar ist und einmal an einem Anzeigeelement (302) angezeigte Zustände und/oder Konfigurationen auch bei Abtrennen des Splitters (30) vom Zugangsnetz (20) für eine bestimmte Zeitdauer erhalten bleiben.

## Claims

1. Inspection method for a network termination configuration connected to an access network (20), said network termination configuration containing: a splitter (30) to which a corresponding network termination device (31, 32) can be connected via at least one port (38, 39) in each case, the ports (38, 39) having different connection technologies,
**characterised in that**
state and/or configuration of one of the ports (38, 39) is determined by means of start-up messages transmitted bidirectionally over the access network (20) and is displayed on a display element (302) located on the splitter (30).

2. Inspection method according to claim 1,
**characterised in that**
in the absence of at least one network termination device (30, 31) the splitter (30) determines state and/or configuration of the port (31, 32) in question.

3. Inspection method according to claims 1 or 2,
**characterised in that**
those messages transmitted between network termination device (31, 32) and access network (20) and containing the state and/or configuration of the port (38, 39) in question are determined by the splitter (30) for a port (38, 39) to which a network termination device (31, 32) is connected and are displayed on a display element (302) assigned to the port (38, 39) in question.

4. Inspection method according to one of claims 1 to 3,
**characterised in that**
the splitter (30) is fed by the access network (20).

5. Inspection method according to one of claims 1 to 4,
**characterised in that**
the splitter (30) has an actuation element (303), so that when the actuation element (303) is actuated the splitter (30) transmits messages in the direction (up) of the access network (20), in order once again to determine the state and/or configuration of a port (38, 39).

6. Inspection method according to claim 5,
**characterised in that**
in each case a display element (301) and in each case an actuation element (302) is provided for each port (38, 39).

7. Inspection method according to one of claims 3 to 6,
**characterised in that**
the same state and/or the same configuration is displayed differently on a display unit (302), depending on whether or not a network termination device (31, 32) is connected to the port (38, 39) in question.

8. Splitter (30) for connection to an access network (30) having ports (38, 39) of different connection technologies and whereby a corresponding network termination unit (31, 32) can be connected to the ports (38, 39),
**characterised in that**
the splitter (30) has means (300, 301, 308) for determining the state and/or configuration of a port (38, 39) by means of start-up messages and for displaying them on a display element (302) located on the splitter (30).

9. Splitter (30) according to claim 8,
**characterised in that**
it has a display element (302) in order to display a determined state and/or a determined configuration.

10. Splitter (30) according to claim 9,
**characterised in that**
the means referred to include a splitter circuit (300) and a processor (301) connected via a bus interface (307), messages (dw, up) being picked up and/or entered via the splitter circuit (300).

11. Splitter (30) according to claim 10,
**characterised in that**
energy supplied from the access network (20) via the splitter circuit (300) can be drawn off and supplied to the processor (301) via a connection (308).

12. Splitter (30) according to claim 9 or 10,
**characterised in that**
in each case a display element (302) and in each case an actuation element (303) are assigned to each of the ports (38), and are connected to the processor (301) via the bus interface (307).

13. Splitter (30) according to claim 11 or 12,
**characterised in that**
the splitter (30) has an energy store and that the processor (301) can be switched to an energy-saving mode and once states and/or configurations have been displayed on a display element (302) they are retained for a certain time even if the splitter (30) is disconnected from the access network (20).

## Revendications

1. Procédé de contrôle d'une configuration de terminaison de réseau raccordé à un réseau (20) d'accès et comprenant : un diviseur (30) auquel peut être raccordé un dispositif (31, 32) de terminaison de réseau correspondant par au moins une connexion (38, 39), les connexions (38, 39) ayant des technologies de connexion différentes,
**caractérisé**
**en ce que** l'on constate l'état et/ou la configuration de l'une des connexions (38, 39) au moyen de messages de mise en route transmis de façon bidirectionnelle par le réseau (20) d'accès et on les visualise sur un élément (302) d'affichage se trouvant sur le diviseur (30).

2. Procédé de contrôle suivant la revendication 1,
**caractérisé**
**en ce qu'**en l'absence d'au moins un appareil (30, 31) de terminaison de réseau, le diviseur (30) constate l'état et/ou la configuration de la connexion (31, 32) concernée.

3. Procédé de contrôle suivant la revendication 1 ou 2,
**caractérisé**
**en ce que**, pour une connexion (38, 39) à laquelle est raccordé un dispositif (31, 32) de terminaison de réseau, chaque message qui est transmis entre le dispositif (31, 32) de terminaison de réseau et le réseau (20) d'accès et qui contient l'état et/ou la configuration de la connexion (38, 39) concernée est constaté par le diviseur (30) et est visualisé sur un élément (302) d'affichage associé à la connexion (38, 39) concernée.

4. Procédé de contrôle suivant l'une des revendications 1 à 3,
**caractérisé**
**en ce que** le diviseur (30) est alimenté par le réseau (20) d'accès.

5. Procédé de contrôle suivant l'une des revendications 1 à 4,
**caractérisé**
**en ce que** le diviseur (30) à un élément (303) d'actionnement, de sorte que, lorsque l'élément (303) d'actionnement est actionné, le diviseur (30) transmet des messages en direction (up) du réseau (20) d'accès pour reconstater l'état et/ou la configuration d'une connexion (38, 39).

6. Procédé de contrôle suivant la revendication 5,
**caractérisé**
**en ce qu'**il est prévu par connexion (38, 39), respectivement, un élément (301) d'affichage et, respectivement, un élément (302) d'actionnement.

7. Procédé de contrôle suivant l'une des revendications 3 à 6,
**caractérisé**
**en ce que** le même état et/ou la même configuration est représenté différemment sur un élément (302) d'affichage selon qu'un dispositif (31, 32) de terminaison de réseau est raccordé à la connexion (38, 39) concernée ou ne l'est.

8. Diviseur (30) de connexion à un réseau (20) d'accès qui a des connexions (38, 39) de technologies de connexion différentes et dans lequel un dispositif (31, 32) de terminaison de réseau correspondant peut être raccordé aux connexions (38, 39),
**caractérisé**
**en ce que** le diviseur (30) a des moyens (300, 301, 308), a des moyens pour constater l'état et/ou la configuration d'une connexion (38, 39) au moyen de messages de mise en route et pour les visualiser sur un élément (302) d'affichage se trouvant sur le diviseur.

9. Diviseur (30) suivant la revendication 8,
**caractérisé**
**en ce qu'**il a un élément (302) d'affichage pour visualiser un état constaté et/ou une configuration constatée.

10. Diviseur (30) suivant la revendication 9,
**caractérisé**
**en ce que** lesdits moyens comprennent un circuit (300) de diviseur et un processeur (301) raccordé par une interface (307) de bus, des messages (dw, up) étant prélevés et/ou insérés par le circuit (300) diviseur.

11. Diviseur (30) suivant la revendication 10,
**caractérisé**
**en ce que** de l'énergie peut être apportée par le réseau (20) d'accès, peut être prélevée par le circuit (300) diviseur et être envoyée au processeur (301) par une liaison (308).

12. Diviseur (30) suivant la revendication 9 ou 10,
**caractérisé**
**en ce qu'**il est associé aux bornes (38), respectivement, un élément (302) d'affichage et, respectivement, un élément (303) d'actionnement qui sont reliés au processeur (301) par l'interface (307) de bus.

13. Diviseur (30) suivant la revendication 11 ou 12,
**caractérisé**
**en ce que** le diviseur (30) a un accumulateur d'énergie et en ce que le processeur (301) peut être commuté dans un mode d'économie d'énergie et des états et/ou des configurations indiqué(e)s une fois sur un élément (302) d'affichage peuvent être conservé(e)s pendant une certaine durée, même si le séparateur (30) est séparé du réseau (20) d'accès.
